# EUROPÄISCHE PATENTSCHRIFT

(11) **EP 4 288 342 B1**
(45) Veröffentlichungstag und Bekanntmachung des Hinweises auf die Patenterteilung: **20.08.2025**
(21) Anmeldenummer: 22708407.6
(22) Anmeldetag: 03.02.2022
(51) Int. Cl.: B64G 1/40, B64G 1/00, B64G 1/62, B64U 10/16

(54) **TRÄGERRAKETE UND VERFAHREN ZUM BETREIBEN EINER TRÄGERRAKETE**
LAUNCH VEHICLE AND METHOD FOR OPERATING A LAUNCH VEHICLE
VÉHICULE DE LANCEMENT ET PROCÉDÉ DE FONCTIONNEMENT D'UN VÉHICULE DE LANCEMENT

(30) Priorität: 04.02.2021 DE 102021102637
(43) Veröffentlichungstag der Anmeldung: 13.12.2023
(73) Patentinhaber: LARCH, Sascha, 86356 Neusäss (DE)
(72) Erfinder: LARCH, Sascha, 86356 Neusäss (DE)
(74) Vertreter: Schlimme, Wolfram
(86) Internationale Anmeldenummer: PCT/EP2022/052612
(87) Internationale Veröffentlichungsnummer: WO 2022/167539

(56) Entgegenhaltungen:
- WO-A1-2017/021758
- CA-A1- 2 428 883
- DE-A1- 102014 010 109
- DE-A1- 102014 019 398
- DE-A1- 102015 014 502
- US-A1- 2013 087 659
- US-A1- 2019 225 330

## Beschreibung

### TECHNISCHES GEBIET

Die vorliegende Erfindung betrifft eine Trägerrakete für Weltraumflüge nach dem Oberbegriff des Patentanspruchs 1. Sie betrifft weiterhin Verfahren zum Betreiben einer Trägerrakete.

### HINTERGRUND DER ERFINDUNG

Zum Flug in den Weltraum vorgesehene Raketen sind üblicherweise mehrstufig ausgebildet, wobei eine mittels Rückstoßantrieben versehene erste Antriebsstufe die Rakete in die oberen Bereiche der Troposphäre bis in den oberen Bereich der Stratosphäre oder sogar darüber hinaus, etwa auf 50 bis 70 km Höhe, befördert, wo dann eine zweite Antriebsstufe gezündet wird, mit der die Rakete in einen Orbit oder auf eine interplanetare Flugbahn transportiert wird. Die erste Antriebsstufe fällt nach Brennschluss der Triebwerke zurück auf die Erde und die zweite Antriebsstufe verglüht in der Regel beim Wiedereintritt in die Atmosphäre. Seit einigen Jahren sind erfolgreiche Versuche unternommen worden, mit Rückstoßantrieben versehene erste Antriebsstufen nach Brennschluss wieder kontrolliert landen zu lassen, um sie wiederverwenden zu können. Eine solche Wiederverwendung von Raketenstufen ist aus wirtschaftlichen Gründen anzustreben.

### STAND DER TECHNIK

Die CA 2 428 883 A1 zeigt und beschreibt ein einstufiges Weltraum-Startfahrzeug von im Wesentlichen quadratischem Grundriss, das in den vier Ecken an seiner Oberseite mit Rotoren versehen ist, die jeweils zwei gegenläufig rotierende Propeller aufweisen. Zusätzlich ist das Startfahrzeug mit einem zentralen Raketenmotor versehen, mit dem der Start erfolgt.

Die DE 4215835 A1 zeigt und beschreibt ein wiederverwendbares einstufiges Raumfluggerät mit einem entlang des Äquators des rotationselliptischen Gerätekörpers angeordneten Umfangsrotor und einem zentral vorgesehenen und vertikal nach unten gerichteten Rückstoßantrieb sowie einem schräg nach unten gerichteten Start-Rückstoßantrieb, der das Raumfluggerät beim Start nach dem mittels des Umfangsrotors erfolgten Abheben in eine schräg nach oben aber vorwiegend horizontal gerichtete Flugbahn beschleunigt, um aerodynamische Auftriebskräfte am Gerätekörper zu erzielen.

Die US 2020/0262590 A1 zeigt und beschreibt eine senkrecht startende Rakete mit einer zylindrischen Raketenstufe und einer separaten Startstufe, deren Startstufen-Antriebe um die zylindrische Raketenstufe herum angeordnet und als luftatmende Verbrennungstriebwerke ausgebildet sind.

Die DE 102014010109 A1 zeigt und beschreibt einen einstufig ausgebildeten militärischen Flugkörper, der nicht für den Weltraumflug, sondern für den ballistischen Wirkkörpertransport ausgebildet ist, und der einen zylindrischen Rumpf aufweist, um den herum vier mit elektrisch betrieben Propellern versehene Triebwerke angeordnet sind.

Die US 2013/0087659 A1 zeigt und beschreibt eine Weltraumrakete, die eine erste Antriebsstufe aufweist, welche mit zwei radial vom zylindrischen Rumpf abstehenden Tragflächen versehen ist, die ein Leitwerk bilden und die an ihren radialen äußeren Enden mit bewegbaren Steuerflossen versehen sind. Damit kann diese erste Raketenstufe nach der Trennung von der weiterfliegenden zweiten Raketenstufe wie ein Tragflächenflugzeug mittels eines Fahrwerks auf der Erde landen. Für den Rückflug und für die Landung können elektrisch angetriebene Propeller vorgesehen sein.

Die WO 2017 / 021 758 A1 zeigt und beschreibt ein Startgerät für den Höhenstart einer Rakete, das vier von der Rakete ausgehende über Kreuz angeordnete radiale Strukturen aufweist, die am jeweiligen freien Ende jeweils einen helikopterartigen elektrisch angetriebenen Rotor aufweisen, wobei die Rotationsachsen der Rotoren parallel zur Raketenlängsachse verlaufen. Die Stromversorgung der elektrischen Antriebe erfolgt über eine vom Boden zum fliegenden Startgerät geführte Leitung von außen.

Die US 2019 / 0 225 330 A1 zeigt und beschreibt ein unbemanntes Luftfahrzeug, das ausgehend von einem zentralen Rumpfkörper vier über Kreuz angeordnete radiale Strukturen aufweist, die am jeweiligen freien Ende jeweils einen helikopterartigen elektrisch angetriebenen Rotor aufweisen. Die elektrische Energie dafür ist in entsprechenden Energiespeichern im Luftfahrzeug gespeichert. Die Rotoren können in einem Antriebsmodus betrieben werden, können aber auch zur Energierückgewinnung in einem Generatormodus betrieben werden.

Die DE 10 2015 014 502 A1 zeigt und beschreibt einen unbemannten Flugkörper mit einem Rumpf, der mit einem Feststoffantrieb ausgestattet ist, und mit einer Hilfsflügeleinrichtung, die zumindest eine aerodynamischen Auftrieb erzeugende Tragfläche aufweist. An den Tragflächen sind elektromotorische Antriebseinrichtungen vorgesehen, die mit einem Druckpropeller als Vortriebspropeller ausgestattet sind.

Die DE 10 2014 019 398 A1 offenbart eine Startrahmenplattform für eine senkrecht startende Rakete, der die Rakete umgibt und eine Mehrzahl von rotorartigen Antriebseinrichtungen aufweist, wobei die Drehachsen der Rotoren parallel zur Längsachse der Rakete ausgerichtet sind. Die rotorartigen Antriebseinrichtungen sind mit konventinellen Verbrennungsmotoren ausgestattet. Die Startrahmenplattform befördert die Rakete auf ein über dem Erdboden liegendes Niveau, von wo aus dann durch Zündung der Raketenmotoren die Rakete gestarten wird. Die Startrahmenplattform schwebt danach an Fallschirmen zurück zur Erdoberfläche.

### DARSTELLUNG DER ERFINDUNG

Aufgabe der vorliegenden Erfindung ist es, eine verbesserte Trägerrakete für Flüge in den Weltraum anzugeben, die einen höheren Wiederverwendungsanteil aufweist.

Diese Aufgabe wird gelöst durch eine Trägerrakete mit den Merkmalen des Anspruchs 1.

Eine Trägerrakete mit einem eine Längsachse aufweisenden Raketenkörper, der zumindest eine von einem vorwiegend parallel zur Längsachse wirksamen Rückstoßantrieb antreibbare Antriebsstufe aufweist, wobei die Trägerrakete mit einer Mehrzahl von mittels jeweils eines Rotorantriebs antreibbaren äußeren Rotoren versehen ist, deren jeweilige Rotorachse im Wesentlichen parallel zur Längsachse des Raketenkörpers ausgerichtet ist, wobei eine mit dem Raketenkörper und / oder der Antriebsstufe gekoppelte oder koppelbare und davon entkoppelbare, separate Startstufe vorgesehen ist, die die Mehrzahl von äußeren Rotoren aufweist, wobei die äußeren Rotoren nach Art eines Multikopters radial außerhalb des Raketenkörpers diesen umgebend angeordnet sind und wobei der jeweilige Rotorantrieb zumindest einen Elektromotor als Antriebsmaschine aufweist, zeichnet sich erfindungsgemäß dadurch aus, dass die Antriebsstufe eine Haupt-Antriebsstufe bildet, die mit dem Raketenkörper und / oder mit einer zumindest einen Rückstoßantrieb aufweisenden Oberstufe der Trägerrakete gekoppelt oder koppelbar und davon entkoppelbar ist, dass die Haupt-Antriebsstufe mit zumindest einem Rückstoßantrieb und eine Mehrzahl von mittels jeweils eines Rotorantriebs antreibbaren inneren Rotoren aufweist, deren jeweilige Rotorachse im Wesentlichen parallel zur Längsachse des Raketenkörpers ausgerichtet ist, und die nach Art eines Multikopters ringförmig um die Längsachse angeordnet sind, und dass die Startstufe mit zumindest einer Stromspeichereinrichtung zur Speicherung von elektrischer Energie und zur Versorgung der äußeren Rotorantriebe mit elektrischer Energie versehen ist und dass zumindest ein Teil der Rotorantriebe bei einer Autorotation der äußeren Rotoren in einem Generatormodus betreibbar ist, in dem elektrische Energie erzeugbar ist, und dass die betreffenden Rotorantriebe ausgebildet sind, um die erzeugte elektrische Energie in die jeweils zugeordnete Stromspeichereinrichtung zurückzuführen.

### VORTEILE

Das erfindungsgemäße Vorsehen einer Startstufe mit elektrisch betriebenen Rotorantrieben ermöglicht es, die Trägerrakete mit ihrer Nutzlast zunächst ohne die Verwendung von als Raketenmotoren ausgebildeten Rückstoßantrieben auf ein vorgegebenes erstes Höhenniveau zu transportieren, wo dann erst die Zündung von derartigen Rückstoßantrieben der eigentlichen Antriebsstufe erfolgt. Die elektrisch angetriebenen Rotoren reduzieren beim Start die Lärmentwicklung und erzeugen keine bodennah entstehenden Triebwerksabgase. Der Verbrauch von Raketentreibstoff und die Menge entsprechend entstehender Abgase werden so ebenso reduziert wie die bodennahe Lärmentwicklung und die bodennahe Abgasentwicklung. Bei der Rückkehr der Startstufe zur Erdoberfläche können die Rotorantriebe der Startstufe genutzt werden, um aktiv einen ausgewählten Landeplatz für die Startstufe anzufliegen und dort eine kontrollierte Landung durchzuführen. Die ringförmige Anordnung der äußeren Rotoren nach Art eines Multikopters bewirkt eine wirksame, agile und stabile Steuerbarkeit der Trägerrakete beim Abheben von der Startplattform bis zum Erreichen des ersten Höhenniveaus. Das erste Höhenniveau liegt in einem Bereich, in dem die Luftdichte der Atmosphäre noch so groß ist, dass ein Vertikalantrieb mittels der Rotoren noch so wirksam ist, dass die mit der Startstufe verbundene Trägerrakete das erreichte Höhenniveau zumindest halten kann. Beim Zurückfallen der von der Trägerrakete abgekoppelten Startstufe auf die Erde werden die Rotoren der Rotorantriebe durch die beim Fallen entstehende Luftströmung angetrieben und versetzen den Elektromotor des zugeordneten Rotorantriebs in Drehung. Die dadurch als Generatoren arbeitenden Rotorantriebe können auf diese Weise elektrische Energie in die ihnen zugeordnete Speichereinrichtung liefern und diesen aufladen. Diese gespeicherte Energie kann wiederum in der Anflugphase zum Landeplatz und bei der Landung als Antriebsenergie für die Rotorantriebe genutzt werden. Die mit der zumindest einen Stromspeichereinrichtung ausgestattete Startstufe ist energetisch autonom, so dass die Rotorantriebe auch nach dem Abkoppeln der Startstufe von der Antriebsstufe beziehungsweise vom Raketenkörper in der Landephase betrieben werden können. Die in der Haupt-Antriebsstufe vorgesehenen Rotorantriebe können beim Start die Rotorantriebe der Startstufe unterstützen und ermöglichen später bei einer Rückkehr der Haupt-Antriebsstufe ebenfalls ein gezieltes Anfliegen eines Landeplatzes für die Haupt-Antriebsstufe und eine kontrollierte Landung der Haupt-Antriebsstufe, so dass auch die Haupt-Antriebsstufe wiederverwendbar ist. Die ringförmige, multikopterartige Anordnung der inneren Rotoren bewirkt auch hier eine wirksame, agile und stabile Steuerbarkeit der Trägerrakete beim Abheben von der Startplattform bis zum Erreichen des ersten Höhenniveaus.

Weitere bevorzugte und vorteilhafte Ausgestaltungsmerkmale der erfindungsgemäßen Trägerrakete sind Gegenstand der Unteransprüche 2 bis 6.

Gemäß einer vorteilhaften Ausführungsform der Erfindung weist auch die Oberstufe, die mit zumindest einem Rückstoßantrieb versehen ist, eine Mehrzahl von mittels jeweils eines Rotorantriebs antreibbaren Landerotoren auf, deren jeweilige Rotorachse im Wesentlichen parallel zur Längsachse des Raketenkörpers ausgerichtet ist, und die nach Art eines Multikopters im Inneren der Oberstufe ringförmig angeordnet sind. Das Vorsehen dieser Landerotoren ermöglicht es, auch die Oberstufe nach einem kontrollierten Wiedereintritt in die Erdatmosphäre und einem anschließenden Sturz zur Erde mittels der dann angetriebenen Landerotoren kontrolliert abzufangen und zu einem Landeplatz zu fliegen und dort zu landen. Dadurch wird auch die Oberstufe wiederverwendbar.

Besonders vorteilhaft ist es, wenn der jeweilige Rotorantrieb zumindest einen Elektromotor als Antriebsmaschine aufweist. Derart elektrisch angetriebene Rotoren reduzieren beim Start die Lärmentwicklung und erzeugen keine bodennah entstehenden Triebwerksabgase.

Auch von Vorteil ist es, wenn die Haupt-Antriebsstufe ebenfalls mit einer Stromspeichereinrichtung zur Speicherung von elektrischer Energie und zur Versorgung der inneren Rotoren mit elektrischer Energie versehen ist. Dadurch ist auch die Haupt-Antriebsstufe energetisch autonom und deren Rotorantriebe können ebenfalls nach dem Abkoppeln der Startstufe von der Antriebsstufe beziehungsweise vom Raketenkörper in der Landephase betrieben werden.

Auch von Vorteil ist es, wenn die Oberstufe mit einer Stromspeichereinrichtung zur Speicherung von elektrischer Energie und zur Versorgung der inneren Rotoren mit elektrischer Energie versehen ist.

Eine besonders vorteilhafte Weiterbildung der Startstufe und / oder der Haupt-Antriebsstufe zeichnet sich dadurch aus, dass zumindest ein Teil der jeweiligen Rotorantriebe bei einer Autorotation der zugeordneten Rotoren in einem Generatormodus betreibbar ist, in dem elektrische Energie erzeugbar ist, und dass die betreffenden Rotorantriebe ausgebildet sind, um die erzeugte elektrische Energie in die jeweils zugeordnete Stromspeichereinrichtung zurückzuführen. Beim Zurückfallen der jeweiligen von der Trägerrakete abgekoppelten Stufe auf die Erde werden die Rotoren der Rotorantriebe durch die beim Fallen entstehende Luftströmung angetrieben und versetzen den Elektromotor des jeweils zugeordneten Rotorantriebs in Drehung. Die dadurch als Generatoren arbeitenden Rotorantriebe können auf diese Weise elektrische Energie in die ihnen zugeordnete Speichereinrichtung liefern und diesen aufladen. Diese gespeicherte Energie kann wiederum in der Anflugphase zum Landeplatz und bei der Landung als Antriebsenergie für die Rotorantriebe genutzt werden.

Der auf das Verfahren zum Betreiben einer Trägerrakete gerichtete Teil der Aufgabe wird alternativ durch das Verfahren gemäß Anspruch 7 und das Verfahren gemäß Anspruch 8 gelöst.

Bei einem ersten Verfahren zum Betreiben einer Trägerrakete mit einer wiederverwendbaren Startstufe wird die Trägerrakete in einem ersten Schritt mittels der Rotorantriebe der Startstufe von einem Startplatz auf ein vorgegebenes erstes Höhenniveau transferiert, wo dann beim Erreichen des ersten Höhenniveaus der Rückstoßantrieb der Antriebsstufe gezündet und die Startstufe vom Raketenkörper beziehungsweise von der Antriebsstufe entkoppelt wird. Die Startstufe sinkt daraufhin aus dem ersten Höhenniveau unter Rückgewinnung von elektrischer Energie durch die als Generatoren arbeitenden Rotorantriebe hinab und wird wieder zur Erde zu einem Landeplatz zurückgeführt.

Bei einem zweiten Verfahren zum Betreiben einer Trägerrakete, die mit einer wiederverwendbaren Startstufe und einer Haupt-Antriebsstufe versehen ist, wird die Trägerrakete in einem ersten Schritt mittels der Rotorantriebe der Startstufe und der Haupt-Antriebsstufe von einem Startplatz auf ein vorgegebenes erstes Höhenniveau transferiert, wo dann beim Erreichen des ersten Höhenniveaus die Startstufe vom Raketenkörper beziehungsweise von der Haupt-Antriebsstufe entkoppelt wird und der Rückstoßantrieb der Haupt-Antriebsstufe gezündet wird. Die Startstufe sinkt daraufhin - wie beim ersten Verfahren - aus dem ersten Höhenniveau hinab und wird wieder zur Erde zu einem Landeplatz zurückgeführt. Die Trägerrakete fliegt anschließend mit dem Rückstoßantrieb der Haupt-Antriebsstufe weiter, wobei die Rotorantriebe der Haupt-Antriebsstufe keinen Beitrag zum Antrieb mehr leisten und vorzugsweise zu deren Schutz abgedeckt werden. Erreicht die Trägerrakete anschließend ein zweites, höheres Höhenniveau, wird die Haupt-Antriebsstufe vom Raketenkörper beziehungsweise von der Oberstufe entkoppelt und der Rückstoßantrieb der Oberstufe wird gezündet. Die Haupt-Antriebsstufe sinkt daraufhin aus dem zweiten Höhenniveau hinab und wird wieder zur Erde zu einem Landeplatz zurückgeführt. Liegt das zweite Höhenniveau im Weltraum außerhalb der Erdatmosphäre, so tritt die Haupt-Antriebsstufe zunächst wieder in die Erdatmosphäre ein. Zum Schutz gegen die beim Wiedereintritt entstehende Hitze ist die Haupt-Antriebsstufe in diesem Fall zumindest bereichsweise mit einem Hitzeschutzschild oder zumindest einer Wärmeschutzschicht versehen.

Bei einem dritten Verfahren zum Betreiben einer Trägerrakete mit einer wiederverwendbaren Startstufe, einer Haupt-Antriebsstufe und einer Oberstufe, wird die Trägerrakete in einem ersten Schritt mittels der Rotorantriebe der Startstufe und der Haupt-Antriebsstufe von einem Startplatz auf ein vorgegebenes erstes Höhenniveau transferiert, wobei beim Erreichen des ersten Höhenniveaus der Rückstoßantrieb der Haupt-Antriebsstufe gezündet und die Startstufe vom Raketenkörper beziehungsweise von der Haupt-Antriebsstufe entkoppelt wird. Daraufhin sinkt die Startstufe aus dem ersten Höhenniveau hinab und wird wieder zur Erde zurückgeführt. Erreicht die Trägerrakete ein zweites, höheres Höhenniveau, wird die Haupt-Antriebsstufe vom Raketenkörper beziehungsweise von der Oberstufe entkoppelt und der Rückstoßantrieb der Oberstufe wird gezündet. Die Haupt-Antriebsstufe sinkt danach aus dem zweiten Höhenniveau zur Erde hinab und wird wieder zurückgeführt. Die zunächst weiterfliegende Oberstufe wird nach dem Erreichen eines Ziel-Orbits mittels zumindest einer Rückstoßantriebsvorrichtung zurück zur Erde befördert und wird nach dem Wiedereintritt in die Erdatmosphäre zur Erdoberfläche zurückgeführt.

Alle drei erfindungsgemäßen Verfahren ermöglichen eine kontrollierte Landung und eine Wiederverwendbarkeit der Startstufe, das zweite und dritte Verfahren ermöglichen darüber hinaus auch noch eine kontrollierte Landung und eine Wiederverwendbarkeit der Haupt-Antriebsstufe und das dritte Verfahren ermöglicht schließlich noch die Wiederverwendung der Oberstufe.

Bei allen drei Verfahren ist es von Vorteil, wenn die Rotoren der Startstufe beim Absinken innerhalb eines Bereichs der Atmosphäre, in dem die Luftdichte ausreichend groß für einen Betrieb der Rotoren ist, bis zu einem ersten Abfang-Höhenniveau in einem Autogyromodus betrieben werden, wobei zumindest ein Teil der Rotoreinrichtungen elektrische Energie erzeugt und in die zugeordnete Stromspeichereinrichtung zurückführt, die dadurch aufgeladen wird. Beim Erreichen des ersten Abfang-Höhenniveaus werden die Rotoreinrichtungen der Startstufe wieder in einen Antriebsmodus zurückgeschaltet, woraufhin die Startstufe in einem kontrollierten Sinkflug- und Landemodus betrieben wird. Der Autogyromodus stabilisiert nicht nur den unkontrollierten Sinkflug der Startstufe vom ersten Höhenniveau zum ersten Abfang-Höhenniveau, sondern liefert zudem elektrische Energie, die im darauffolgenden kontrollierten Sinkflug, beim Landeanflug und bei der Landung genutzt werden kann.

Beim zweiten Verfahren ist es von Vorteil, wenn in analoger Weise die Rotoren der Haupt-Antriebsstufe beim Absinken (innerhalb der Atmosphäre bei ausreichend großer Luftdichte) bis zu einem zweiten Abfang-Höhenniveau in einem Autogyromodus betrieben werden, wobei zumindest ein Teil der Rotoreinrichtungen elektrische Energie erzeugt und in die zugeordnete Stromspeichereinrichtung zurückführt, und wenn beim Erreichen des zweiten Abfang-Höhenniveaus die Rotoreinrichtungen der Haupt-Antriebsstufe wieder in einen Antriebsmodus zurückgeschaltet werden, woraufhin die Haupt-Antriebsstufe in einem kontrollierten Sinkflug- und Landemodus betrieben wird. Auch hier stabilisiert der Autogyromodus nicht nur den unkontrollierten Sinkflug der Haupt-Antriebsstufe vom zweiten Höhenniveau zum zweiten Abfang-Höhenniveau, sondern liefert zudem elektrische Energie in die zugeordnete Stromspeichereinrichtung, die im darauffolgenden kontrollierten Sinkflug, beim Landeanflug und bei der Landung wieder zum Antrieb der Rotoren genutzt werden kann.

Schließlich ist es bei einem dritten Verfahren von Vorteil, wenn die Landerotoren der Oberstufe, die bei der Reise in den Orbit und zurück in die Atmosphäre durch entsprechende Klappen abgedeckt und geschützt sind, beim Absinken innerhalb der Erdatmosphäre bis zu einem dritten Abfang-Höhenniveau in einem Autogyromodus betrieben werden, wobei zumindest ein Teil der Rotoreinrichtungen elektrische Energie erzeugt und in die zugeordnete Stromspeichereinrichtung zurückführt, und wenn beim Erreichen des dritten Abfang-Höhenniveaus die Rotoreinrichtungen der Oberstufe in einen Antriebsmodus geschaltet werden, woraufhin die Oberstufe in einem kontrollierten Sinkflug- und Landemodus betrieben wird.

Die Idee der vorliegenden Erfindung besteht also primär darin, bei einer vertikal oder im Wesentlichen vertikal startenden Trägerrakete zusätzlich eine separate Startstufe nach Art eines Multikopters mit vorzugsweise batterieelektrischem Rotor- oder Propeller-Antrieb vorzusehen, die die eigentliche Trägerrakete bis in den Bereich der unteren Stratosphäre trägt, wo dann erst die Rückstoßantriebe, also beispielsweise die Raketenmotoren, gezündet werden, woraufhin die von der Trägerrakete abgekoppelte Startstufe zurück zur Erde fällt und mittels ihrer Rotorantriebe zum Startplatz oder zu einem anderen Landeplatz kontrolliert zurückgeführt wird. Bei diesem Rücksturz zur Erde werden die Rotorantriebe vorzugsweise im Autorotations-Modus (Autogyro-Modus) betrieben, wobei die Rotoren beziehungsweise Propeller von der diese beim Sturz anströmenden Luft in Rotation versetzt werden und wobei die Rotorwelle einen Generator, vorzugsweise die als Generator wirkende elektrische Antriebsmaschine, antreiben und so elektrische Energie erzeugen, mit der die Stromspeichereinrichtungen für den während der Landephase erforderlichen angetriebenen Betriebszustand der Rotorantriebe aufgeladen werden.

Bei dem Transfer zur Stratosphäre mittels der Startstufe können optional weitere, vorzugsweise batterieelektrisch betriebene, Rotorantriebe mit zugeordneten Rotoren, die in der ersten Raketenstufe, der Haupt-Antriebsstufe, vorgesehen sind, unterstützend mitwirken. Derartige in einer Raketenstufe (Haupt-Antriebsstufe oder Oberstufe) vorgesehene Rotorantriebe, die wie jene der Startstufe aufgebaut sein können und genauso wirken, können mit ihren jeweiligen Rotoren die auf die Erde zurückfallende Raketenstufe abbremsen und dabei vorzugsweise elektrische Energie erzeugen und speichern, und sie in einem kontrollierten Landeflug mit den aktiv angetriebenen Rotorantrieben zum Startplatz oder zu einem anderen Landeplatz zurückführen, wodurch die Raketenstufe wiederverwendbar ist.

Anstelle von Batterien oder Akkumulatoren können zur Energieversorgung der Rotorantriebe selbstverständlich auch andere Stromspeichereinrichtungen wie beispielsweise Superkondensatoren oder auch andere elektrische Energiequellen wie beispielsweise Brennstoffzellen vorgesehen sein.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: einen Vertikalschnitt durch eine erste Ausführungsform einer erfindungsgemäßen Trägerrakete;
- Fig. 2: einen Horizontalschnitt durch eine erfindungsgemäß ausgebildete Haupt-Antriebsstufe der ersten Ausführungsform entlang der Linie II-II in Fig. 1;
- Fig. 3: eine Draufsicht auf eine erfindungsgemäß ausgebildete Startstufe;
- Fig. 4: einen Vertikalschnitt durch eine zweite Ausführungsform einer erfindungsgemäßen Trägerrakete;
- Fig. 5: einen Horizontalschnitt durch eine erfindungsgemäß ausgebildete Haupt-Antriebsstufe der zweiten Ausführungsform entlang der Linie V-V in Fig. 4 und
- Fig. 6: einen Horizontalschnitt durch eine erfindungsgemäß ausgebildete Oberstufe der zweiten Ausführungsform entlang der Linie VI-VI in Fig. 4.

### DARSTELLUNG VON BEVORZUGTEN AUSFÜHRUNGSBEISPIELEN

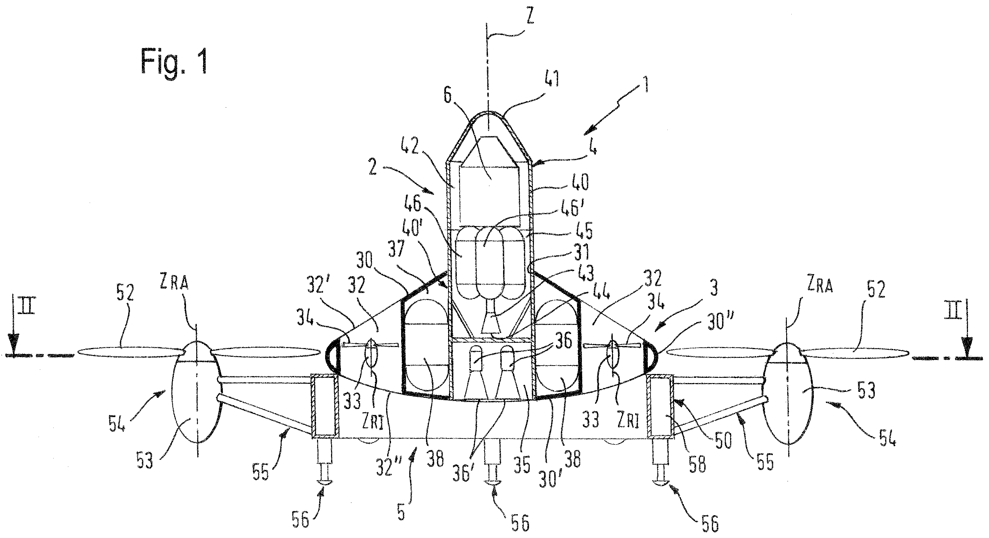

Fig. 1 zeigt einen vertikalen Schnitt durch einen erste Ausführungsform einer erfindungsgemäßen Trägerrakete 1. Die Trägerrakete 1 umfasst einen Raketenkörper 2, der eine Haupt-Antriebsstufe 3 und eine Oberstufe 4 aufweist und der im Bereich seiner Haupt-Antriebsstufe 3 mit einer Startstufe 5 entkoppelbar verbunden ist.

Die Oberstufe 4 ist im Wesentlichen von einem zylindrischen Gehäusemantel 40 gebildet, der mit einer abklappbaren konischen obere Spitze 41 versehen ist. Im oberen Bereich der Oberstufe 4 ist ein Nutzlastraum 42 zur Aufnahme einer Nutzlast 6 ausgebildet, der durch Aufklappen der konischen Spitze 41 zugänglich ist, so dass die Nutzlast 6 im Weltraum aus dem Nutzlastraum 42 heraus absetzbar ist.

Im unteren Bereich der Oberstufe 4, also auf der von der konischen Spitze 41 abgewandten Unterseite, ist ein Rückstoßantrieb 43 vorgesehen, dessen Austrittsdüse 44 nach unten gerichtet ist und das koaxial zur vertikalen Längsachse Z der Trägerrakete 1 angeordnet ist. Zwischen dem Rückstoßantrieb 43 und dem Nutzlastraum 42 ist ein Versorgungsraum 45 vorgesehen, in dem eine Mehrzahl von Treibstofftanks 46, 46' angeordnet ist, die die Treibstoffe für den Betrieb des Rückstoßantriebs 43 enthalten und die über entsprechende (nicht gezeigten) Treibstoffleitungen mit dem Rückstoßantrieb 43 verbunden sind.

Der von der konischen Spitze 41 abgewandte untere Bereich 40' des zylindrischen Gehäusemantels 40 der Oberstufe 4 greift in eine angepasste zylindrische Aufnahmeöffnung 31 in der Oberseite des Gehäusemantels 30 der Haupt-Antriebstufe 3 ein und ist dort lösbar eingesetzt. Die Oberstufe 4 ist mit der Haupt-Antriebstufe 3 auf diese Weise entkoppelbar verbunden.

Der Gehäusemantel 30 der Haupt-Antriebsstufe 3 ist von kugelsektorartiger Gestalt mit einer von der Oberstufe 4 abgewandten konvexen unteren Wand 30'. Die von der Haupt-Antriebsstufe 3 gebildete wiederverwendbare erste Raketenstufe der Trägerrakete 1 hat dabei die Form eines flachen Kegelstumpfes mit einer konvexen Basis, ähnlich einer Apollokapsel. Der Außendurchmesser der Haupt-Antriebsstufe 3 ist deutlich größer als der Außendurchmesser der zylindrischen Oberstufe 4. Im gezeigten Beispiel ist der Außendurchmesser der Haupt-Antriebsstufe 3 etwa viermal so groß wie der Außendurchmesser der Oberstufe 4.

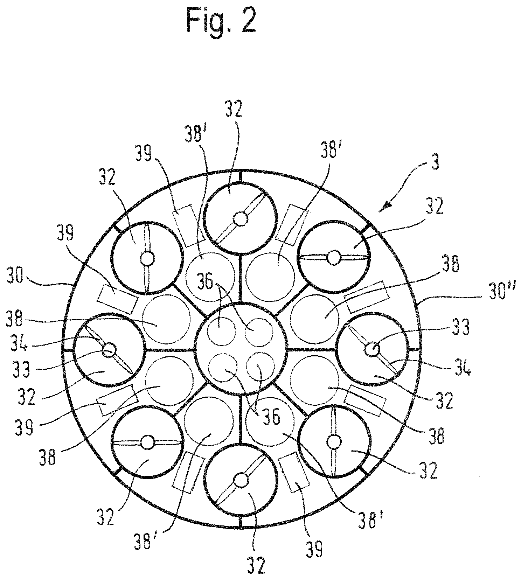

In seinem radial äußeren Bereich, nahe des größten Umfangsrandes 30" des Gehäusemantels 30 der Haupt-Antriebsstufe 3 sind achsparallel zur Längsachse Z der Trägerrakete 1 verlaufende vertikale Luftkanäle 32 über den Umfang der Haupt-Antriebsstufe 3 verteilt vorgesehen. Vorzugsweise sind acht vertikale Luftkanäle 32 vorgesehen (Fig. 2). In jedem der Luftkanäle 32 ist ein von einem elektrischen Rotorantrieb 33 antreibbarer propellerartiger innerer Rotor 34 angeordnet, dessen jeweilige innere Rotorachse Z_{RI} parallel zur Längsachse Z der Trägerrakete 1 verläuft. Die oberen Öffnungen 32' und die unteren Öffnungen 32" der Luftkanäle 32 sind im Bereich der des Gehäusemantels 30 mittels (nicht gezeigter) Schutzklappen verschließbar.

Zentral unterhalb der Aufnahmeöffnung 31 für die Oberstufe 4 ist in der Haupt-Antriebsstufe 3 ein zentraler Triebwerksraum 35 mit einer Mehrzahl von Rückstoßantrieben 36 vorgesehen, deren jeweilige Austrittsdüse 36' vom Nutzlastraum 42 weg gerichtet nach unten mündet. Der im Betrieb der Rückstoßantriebe 36 nach unten offene Triebwerksraum 35 ist durch (nicht gezeigte) Schutzklappen verschließbar. Insbesondere bei einem Sturzflug der wiederverwendbaren Haupt-Antriebsstufe 3 zurück zur Erde verschließen diese Schutzklappen den Triebwerksraum 35.

In einem ringförmigen Innenraumbereich 37 zwischen den vertikalen Luftkanälen 32 und dem zentralen Triebwerksraum 35 sind über den Umfang verteilt Treibstofftanks 38, 38' für die Versorgung der Rückstoßantriebe 36 angeordnet. Radial außerhalb dieses ringförmigen Innenraumbereichs 37 sind elektrische Stromspeichereinrichtungen 39 zur Energieversorgung der elektrischen Rotorantriebe 33 in Umfangsrichtung zwischen den Luftkanälen 32 vorgesehen.

Alternativ können die Rotorantriebe 33 auch von in der Startstruktur 5 vorgesehenen Stromspeichereinrichtungen mit elektrischer Energie versorgt werden.

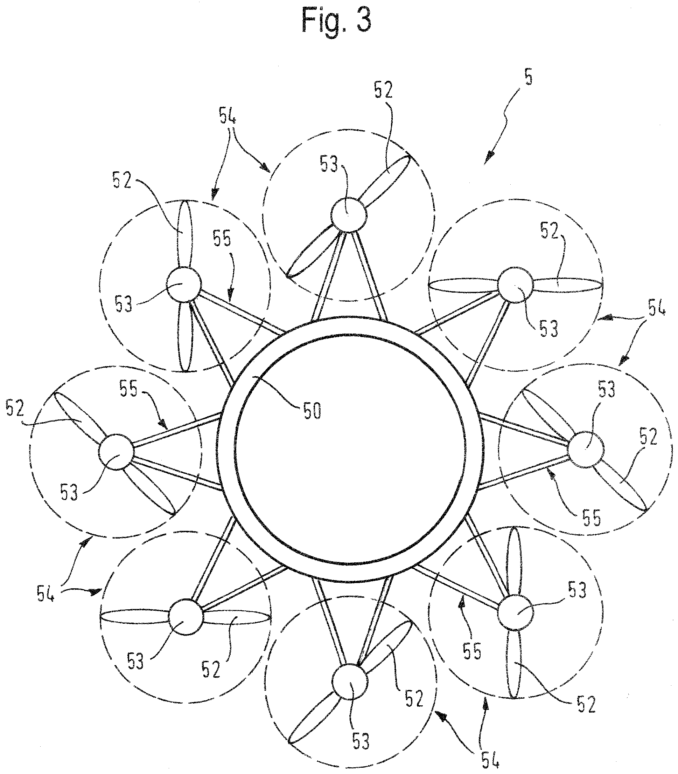

Die Haupt-Antriebsstufe 3 liegt mit ihrer konvexen unteren Wand 30' auf einem Ringstrukturelement 50 der in Fig. 3 isoliert dargestellten Startstufe 5 auf und ist dort mit der Startstufe 5 entkoppelbar verbunden. Diese entkoppelbare Verbindung kann beispielsweise mittels (nicht dargestellter) Halteklammern gebildet sein. Über diese Halteklammern kann auch die Übertragung von elektrischer Energie von der Startstufe 5 zur Haupt-Antriebsstufe 3 erfolgen.

Die Startstufe 5 weist eine Mehrzahl von um das Ringstrukturelement 50 herum angeordneten propellerartigen äußeren Rotoren 52 auf, die jeweils von einem elektrischen Rotorantrieb 53 zur Rotation um eine jeweilige äußere Rotorachse Z_{RA}, die parallel zur Längsachse Z der Trägerrakete 1 verläuft, antreibbar sind. Der jeweilige elektrische Rotorantrieb 53 und der diesem zugeordnete äußere Rotor 52 bilden zusammen eine jeweilige Rotorantriebsgondel 54. Jede Rotorantriebsgondel 54 ist über eine zugehörige Trägerstruktur 55 mechanisch mit dem Ringstrukturelement 50 verbunden.

Wie in Fig. 3 zu sehen ist, sind in dem dort gezeigten Beispiel acht Rotorantriebsgondeln 54 im Abstand von 45° zueinander gleichmäßig ringförmig um das Ringstrukturelement 50 herum angeordnet, so dass die Startstufe 5 multikopterartig nach Art eines Oktokopters ausgebildet ist. An der von dem Raketenkörper 30 abgewandten Unterseite sind am Ringstrukturelement 50 mehrere Landebeine 56 vorgesehen. Im Inneren des Ringstrukturelements 50 sind elektrische Stromspeichereinrichtungen 58 vorgesehen, die über (nicht dargestellte) elektrische Leitungen mit den Rotorantrieben 53 elektrisch leitend verbindbar oder verbunden sind.

Die Oberstufe 4 kann in einer alternativen Ausführungsform auch komplett vom Gehäusemantel 30 der Haupt-Antriebsstufe 3 umschlossen sein, die dann den zylindrischen oberen Gehäusemantel mit der aufklappbaren Spitze 41 aufweist. Die Oberstufe kann bei dieser Ausführungsform zusammen mit der in oder an der Oberstufe 4 vorgesehenen Nutzlast 6 durch die aufklappbare Spitze 41 ausgesetzt werden.

Die in den Fig. 1 bis 3 dargestellte Ausführungsform der Trägerrakete 1 bildet ein teilwiederverwendbares Trägerraketen-System für kleine und mittlere Nutzlasten, die beispielsweise in einen sonnensynchronen Orbit transportiert werden sollen.

Der Flugablauf der in den Fig. 1 bis 3 dargestellte ersten Ausführungsform der Trägerrakete 1 gestaltet sich wie folgt:
Beim Start werden zunächst die Rotoren der Startstufe 5 und der Haupt-Antriebsstufe 3 gemeinsam betrieben, wobei die Rotoren 52 der Haupt-Antriebsstufe 3 aus den Stromspeichereinrichtungen 58 der Startstufe 5 oder aus bordeigenen Stromspeichereinrichtungen 39 gespeist werden. Die Startstufe mit der aufgesetzten Trägerrakete 1 steigt mit einer Geschwindigkeit von beispielsweise 50 m/s (180 km/h) senkrecht nach oben bis in den unteren Bereich der Stratosphäre, beispielsweise auf eine Höhe von ca. 15 km. In dieser Höhe wird das Raketentriebwerk, also der Rückstoßantrieb 43, der Haupt-Antriebsstufe 3 gezündet und die Halteklammern zwischen der Startstufe 5 und der Haupt-Antriebsstufe 3 werden gelöst. Gleichzeitig wird die Stromversorgung der Rotoren der Haupt-Antriebsstufe auf die internen Stromspeichereinrichtungen 39 umgeschaltet. Die Stromspeichereinrichtungen 58 der Startstufe 5 sind jetzt leer und die Rotorantriebe 53 der Startstufe 5 werden abgeschaltet, woraufhin die Startstufe 5 in einen freien Fall übergeht. Während dieses Sturzflugs werden die äußeren Rotoren 52 durch die anströmende Luft in Rotation versetzt (Autorotation) wodurch zum einen der Fall der Startstufe gebremst wird und durch Schaltung der von Elektromotoren gebildeten Rotorantriebe 53 als Generatoren die Stromspeichereinrichtungen 58 der Startstufe 5 wieder teilweise aufgeladen werden. In einer geeigneten Höhe werden die Rotorantriebe 53 wieder eingeschaltet und der Sturzflug wird abgefangen. Die Startstufe 5 landet daraufhin wieder kontrolliert am Startplatz oder auf einem anderen vorgegebenen Landeplatz.

In der Zwischenzeit setzt die Haupt-Antriebsstufe 3 ihren Flug fort, wobei die Rotoren 34 und die Rotorantriebe 33 der Haupt-Antriebsstufe 3 noch mitlaufen, solange sie einen Schub erzeugen. Nach Brennschluss der Rückstoßantriebe 36 der Haupt-Antriebsstufe 3 wird die Spitze 41 geöffnet und die Oberstufe 4 mit der Nutzlast 6 ausgesetzt die den Flug fortsetzen. Die Oberstufe 4 dieser Ausführungsform ist nicht wiederverwendbar.

Die Rückführung der ebenfalls wiederverwendbaren Haupt-Antriebsstufe 3 kann auf zwei Arten erfolgen. Entweder die Rückstoßantriebe 36 der Haupt-Antriebsstufe 3 werden erneut, gegen die Flugrichtung, gezündet um ein "Boost-Back" Manöver auszuführen und die Haupt-Antriebsstufe 3 fällt danach auf einer Parabelbahn zum Startplatz zurück, oder die Haupt-Antriebsstufe 3 fällt ohne "Boost-Back" zur Erde zurück, landet dann aber vom ursprünglichen Startplatz entfernt z.B. auf einem Schiff. In beiden Fällen werden nach der letzten Triebwerkszündung der Rückstoßantriebe 36 die Schutzklappen des Triebwerksraums 35 geschlossen und die Haupt-Antriebsstufe 3 kehrt im freien Fall zum Boden zurück. Wie bei der Startstufe 5 wird der Fall durch Autorotation der inneren Rotoren 34 und der Rotorantriebe 33 gebremst und die Akkus der Haupt-Antriebsstufe 3 werde wieder geladen. Das Abfangen des Sturzflugs erfolgt durch Einschalten der Rotorantriebe 33, die Landung erfolgt jedoch, im Gegensatz zur Startstufe, auf einem vorbereiteten Luftkissen. Nach dem Flug und der Rückführung der Startstufe 5 und der Haupt-Antriebsstufe 3 werden diese überprüft, gegebenenfalls repariert und für den nächsten Flug vorbereitet.

Die erfindungsgemäße Trägerrakete 1 kann auch als Höhenforschungsrakete genutzt werden indem anstelle der Oberstufe ein entsprechendes Experimentenpaket installiert wird.

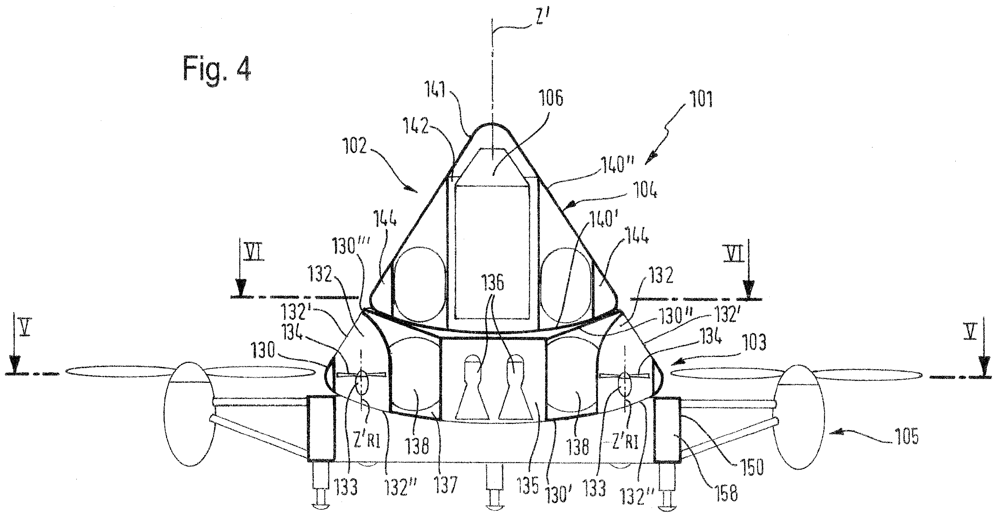

Fig. 4 zeigt eine zweite Ausführungsform einer erfindungsgemäßen Trägerrakete 101 mit einer Haupt-Antriebsstufe 103 und einer eine Nutzlast 106 tragenden Oberstufe 104. Die den Raketenkörper 102 bildende Einheit aus Haupt-Antriebsstufe 103 und Oberstufe 104 besitzt eine kugelsektorartige Gestalt und bildet die Form eines flachen Kegelstumpfes mit einer konvexen Basis, ähnlich einer Apollokapsel. Auch diese Trägerrakete 101 ist - wie beim ersten Ausführungsbeispiel - mit einer Startstufe 105 versehen, die genauso wie die in Fig. 3 dargestellte Startstufe 5 des ersten Ausführungsbeispiels ausgebildet ist; für die Startstufe 105 treffen daher dieselben Ausführungen zu wie sie in Verbindung mit Fig. 3 für die Startstufe 5 beschrieben worden sind.

Die Haupt-Antriebsstufe 103 ist ebenfalls analog der Haupt-Antriebsstufe 3 des ersten Ausführungsbeispiels aufgebaut, allerdings weicht die äußere Gestalt der Haupt-Antriebsstufe 103 von der ersten Ausführungsform ab, da der Gehäusemantel 130 der Haupt-Antriebsstufe 103 einen Hohlkugelsektor mit einer konvex nach außen gewölbten unteren Wand 130' und einer konkav nach innen gewölbten oberen Wand 130" beschreibt.

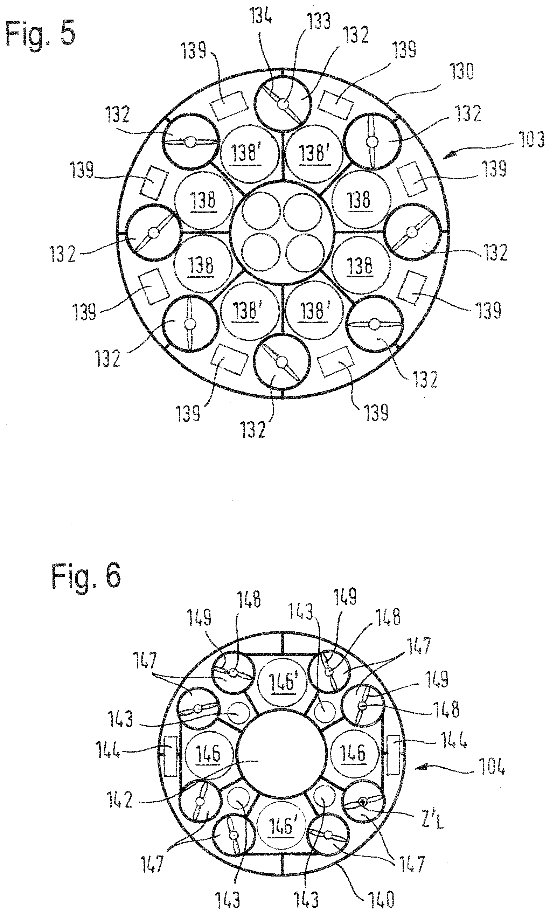

Wie beim ersten Ausführungsbeispiel ist die Haupt-Antriebsstufe 103 mit im unteren Bereich vertikal und achsparallel zur vertikalen Längsachse Z' der Trägerrakete 101 verlaufenden Luftkanälen 132 über den Umfang der Haupt-Antriebsstufe 103 verteilt versehen. Vorzugsweise sind acht vertikale Luftkanäle 132 vorgesehen (Fig. 5). Auch bei dieser zweiten Ausführungsform verläuft der jeweilige Luftkanal 132 von einer jeweiligen unteren Öffnung in der konvex nach außen gewölbten unteren Wand 130' nach oben zu einer Mündung in der kegelmantelartigen Seitenfläche 130‴ des Gehäusemantels 130. Aufgrund des gezeigten zweistufigen Designs dieser beispielhaften zweiten Ausführungsform ist der obere Teil des jeweiligen Luftkanals 132 schräg nach außen gekrümmt. Der zentrale Triebwerksraum 135 mit den Rückstoßantrieben 136 und der ringförmige Innenraumbereich 137 mit den darin enthaltenen Treibstofftanks 138, 138' entsprechen in ihrem Aufbau der ersten Ausführungsform, wie in Fig. 5 zu erkennen ist.

In jedem der Luftkanäle 132 ist auch hier ein von einem elektrischen Rotorantrieb 133 antreibbarer propellerartiger innerer Rotor 134 angeordnet, dessen jeweilige innere Rotorachse Z'_{RI} parallel zur Längsachse Z' der Trägerrakete 101 verläuft. Die oberen Öffnungen 132' und die unteren Öffnungen 132" der Luftkanäle 132 können im Bereich der Seitenflächen 130‴ und der konvexen unteren Wand 130' mittels (nicht gezeigter) Schutzklappen verschließbar sein.

Auch bei der zweiten Ausführungsform sind radial außerhalb dieses ringförmigen Innenraumbereichs 137 elektrische Stromspeichereinrichtungen 139 zur Energieversorgung der elektrischen Rotorantriebe 133 in Umfangsrichtung zwischen den Luftkanälen 132 vorgesehen. Alternativ können die Rotorantriebe 133 auch von in der im Ringstrukturelement 150 der Startstufe 105 vorgesehenen Stromspeichereinrichtungen 158 mit elektrischer Energie versorgt werden.

Die Haupt-Antriebsstufe 103 liegt - wie bei der ersten Ausführungsform - mit ihrer konvexen unteren Wand 130' auf einem Ringstrukturelement 150 der Startstufe 105 auf und ist dort mit der Startstufe 105 entkoppelbar verbunden. Diese entkoppelbare Verbindung kann beispielsweise mittels (nicht dargestellter) Halteklammern gebildet sein. Über diese Halteklammern kann auch die Übertragung von elektrischer Energie von der Startstufe 105 zur Haupt-Antriebsstufe 103 erfolgen.

Die Oberstufe 104 besitzt eine kugelsektorartige Gestalt ähnlich einer Apollokapsel und bildet die Form eines flachen Kegelstumpfes mit einer konvexen Basis die von einer konvexen unteren Wand 140' gebildet ist, deren Krümmung der Krümmung der konkav nach innen gewölbten oberen Wand 130" der Haupt-Antriebsstufe 103 entspricht. Die konvexe untere Wand 140' der Oberstufe 104 liegt auf der konkav nach innen gewölbten oberen Wand 130" der Haupt-Antriebsstufe 103 auf. Entkoppelbare Kopplungsmittel halten die Oberstufe 104 an der Haupt-Antriebsstufe fest. Vorzugsweise ist die konvexe untere Wand 140' der Oberstufe 104 außen mit einem (nicht dargestellten) Hitzeschutzschild versehen, der die Oberstufe 104 beim Wiedereintritt in die Erdatmosphäre schützt.

Wie bei der ersten Ausführungsform ist auch diese Oberstufe 104 mit einer abklappbaren konischen obere Spitze 141 versehen. Im oberen Bereich der Oberstufe 104 ist ein Nutzlastraum 142 zur Aufnahme der Nutzlast 106 ausgebildet, der durch Aufklappen der konischen Spitze 141 zugänglich ist, so dass die Nutzlast 106 im Weltraum aus dem Nutzlastraum 142 heraus absetzbar ist. Die seitliche Wandung 140" des Gehäusemantels 140 der Oberstufe 104 weist eine kegelmantelartige Seitenfläche auf, die in die kegelmantelartige Seitenfläche der Haupt-Antriebsstufe 103 übergeht.

Wie in der Horizontalschnitt-Darstellung der Fig. 6 zu erkennen ist, ist auch die Oberstufe 104 in ihrem radial äußeren Bereich mit im Wesentlichen vertikal verlaufenden Luftkanälen 147 ausgestattet, in denen jeweils ein von einem elektrischen Rotorantrieb 148 antreibbarer Landerotor 149, angeordnet ist, der um eine jeweilige Rotorachse Z'_{L} rotierbar ist, die parallel zur Längsachse Z' verläuft. Die oberen Öffnungen und die unteren Öffnungen der Luftkanäle 147 sind im Bereich der der seitlichen Wandung 140" des Gehäusemantels 140 und der konvexen unteren Wand 140' der Oberstufe 104 mittels (nicht gezeigter) Schutzklappen verschließbar. Die elektrischen Rotorantriebe 148 sind mit elektrischen Stromspeichereinrichtungen 144 in der Oberstufe 104 elektrisch leitend verbunden.

Um den Nutzlastraum 142 herum sind, wie in Fig. 6 zu sehen ist, koaxial zur vertikalen Längsachse Z der Trägerrakete 1 vier Rückstoßantriebe 143 vorgesehen, deren jeweilige Austrittsdüse nach unten gerichtet ist. Die die jeweilige Austrittsdüse umgebenden (nicht gezeigten) Austrittsöffnungen in der konvexen unteren Wand 140' der Oberstufe 104 sind durch (nicht gezeigte) Schutzklappen verschließbar.

Zwischen den Rückstoßantrieben 143 und den paarweise angeordneten Luftkanälen 147 sind Treibstofftanks 146, 146' angeordnet, die die Treibstoffe für den Betrieb der Rückstoßantriebe 143 enthalten und die über entsprechende (nicht gezeigten) Treibstoffleitungen mit den Rückstoßantrieben 143 verbunden sind.

Die in den Fig. 4 bis 6 dargestellte Ausführungsform der Trägerrakete 101 bildet ein voll wiederverwendbares Trägerraketen-System für kleine und mittlere Nutzlasten, die beispielsweise in einen sonnensynchronen Orbit transportiert werden sollen.

Der Flugablauf der in den Fig. 4 bis 6 dargestellte zweiten Ausführungsform der Trägerrakete 101 gestaltet sich wie folgt:
Der Ablauf des Fluges der Startstufe 105 und der Haupt-Antriebsstufe 103 entspricht dem in Verbindung mit dem ersten Ausführungsbeispiel beschriebenen Ablauf, wobei die Schutzklappen für die Luftkanäle 147 geschlossen sind.

Die Oberstufe 104 mit der Nutzlast 106 erreicht Orbitalgeschwindigkeit. Nach dem Aussetzen der Nutzlast 106 im Orbit wird die Oberstufe 104 durch erneutes Zünden ihrer Rückstoßantriebe 143 soweit abgebremst, dass sie in einer ballistischen Bahn wieder in die Atmosphäre eintritt. Vor dem Wiedereintritt werden die Schutzklappen für die Rückstoßantriebe 143 geschlossen. Die Schutzklappen für die Luftkanäle 147 bleiben weiterhin geschlossen. Die Landung der Oberstufe 104 erfolgt, wie bei der Haupt-Antriebsstufe 103, durch Öffnen der Schutzklappen für die Luftkanäle und Einschalten der Rotorantriebe 148 und daraufhin Abfangen des Sturzflugs mittels der Rotorantriebe 148 wie dies analog in Verbindung mit der Haupt-Antriebsstufe beschrieben worden ist. Die kontrollierte Landung erfolgt auch hier auf einem vorbereiteten Luftkissen.

Die Trägerrakete 101 der zweiten Ausführungsform kann auch für rückführbare Nutzlasten verwendet werden die fest in die Oberstufe 104 eingebaut sind und nach Missionsende zusammen mit der Oberstufe 104 zur Erde zurückkehren.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Trägerrakete
- 2: Raketenkörper
- 3: Haupt-Antriebsstufe
- 4: Oberstufe
- 5: Startstufe
- 30: Gehäusemantel der Haupt-Antriebsstufe 3
- 30': konvexe untere Wand
- 30": Umfangsrand des Gehäusemantels 30
- 31: zylindrische Aufnahmeöffnung
- 32: Luftkanäle
- 32': obere Öffnungen
- 32": untere Öffnungen
- 33: elektrischer Rotorantrieb
- 34: innerer Rotor
- 35: zentraler Triebwerksraum
- 36: Rückstoßantrieb
- 37: ringförmiger Innenraumbereich
- 38: Treibstofftank
- 38': Treibstofftank
- 39: elektrische Stromspeichereinrichtung
- 40: zylindrischer Gehäusemantel
- 40': unterer Bereich des zylindrischen Gehäusemantels 40
- 41: konische Spitze
- 42: Nutzlastraum
- 43: Rückstoßantrieb
- 44: Austrittsdüse
- 45: Versorgungsraum
- 46: Treibstofftank
- 46': Treibstofftank
- 50: Ringstrukturelement
- 52: äußerer Rotor
- 53: elektrischer Rotorantrieb
- 54: Rotorantriebsgondel
- 55: Trägerstruktur
- 56: Landebein
- 58: Stromspeichereinrichtungen
- 101: Trägerrakete
- 102: Raketenkörper
- 103: Haupt-Antriebsstufe
- 104: Oberstufe
- 105: Startstufe
- 106: Nutzlast
- 130': untere Wand
- 130": obere Wand
- 130‴: Seitenfläche
- 132: Luftkanal
- 132': obere Öffnung des Luftkanals 132
- 132": untere Öffnung des Luftkanals 132
- 133: elektrischer Rotorantrieb
- 134: innerer Rotor
- 135: zentraler Triebwerksraum
- 136: Rückstoßantrieb
- 137: ringförmiger Innenraumbereich
- 138: Treibstofftank
- 138': Treibstofftank
- 139: elektrische Stromspeichereinrichtung
- 140: Gehäusemantel der Oberstufe 104
- 140': untere Wand der Oberstufe 104
- 140": seitliche Wandung des Gehäusemantels 140
- 141: konische Spitze
- 142: Nutzlastraum
- 143: Rückstoßantrieb
- 146: Treibstofftank
- 146': Treibstofftank
- 147: Luftkanal
- 148: elektrischer Rotorantrieb
- 149: Landerotor
- 150: Ringstrukturelement
- 158: Stromspeichereinrichtungen

- Z: Längsachse
- Z': vertikale Längsachse
- Z'_{L}: Rotorachse
- Z_{RI}: innere Rotorachse
- Z'_{RI}: innere Rotorachse
- Z_{RA}: äußere Rotorachse

## Patentansprüche

1. Trägerrakete mit einem eine Längsachse (Z, Z') aufweisenden Raketenkörper (2; 102), der zumindest eine von einem vorwiegend parallel zur Längsachse (Z, Z') wirksamen Rückstoßantrieb (36; 136) antreibbare Antriebsstufe (3; 103) aufweist,
wobei die Trägerrakete mit einer Mehrzahl von mittels jeweils eines Rotorantriebs antreibbaren äußeren Rotoren versehen ist, deren jeweilige Rotorachse im Wesentlichen parallel zur Längsachse des Raketenkörpers ausgerichtet ist,
wobei die Trägerrakete eine mit dem Raketenkörper (2; 102) und / oder der Antriebsstufe (3; 103) gekoppelte oder koppelbare und davon entkoppelbare, separate Startstufe (5; 105) umfasst, die die Mehrzahl von äußeren Rotoren (52) aufweist,
wobei die äußeren Rotoren (52) nach Art eines Multikopters radial außerhalb des Raketenkörpers (2; 102) diesen umgebend angeordnet sind und
wobei der jeweilige Rotorantrieb (53) zumindest einen Elektromotor als Antriebsmaschine aufweist,
wobei die Antriebsstufe eine Haupt-Antriebsstufe (3; 103) bildet, die mit dem Raketenkörper (2; 102) und / oder mit einer zumindest einen Rückstoßantrieb (43; 143) aufweisenden Oberstufe (4; 104) der Trägerrakete (1; 101) gekoppelt oder koppelbar und davon entkoppelbar ist,
wobei die Haupt-Antriebsstufe (3; 103) zumindest einen Rückstoßantrieb (36; 136) und eine Mehrzahl von mittels jeweils eines Rotorantriebs (33; 133) antreibbaren inneren Rotoren (34; 134) aufweist, deren jeweilige Rotorachse (Z_{RI}, Z'_{RI}) im Wesentlichen parallel zur Längsachse (Z, Z') des Raketenkörpers (2; 102) ausgerichtet ist, und die nach Art eines Multikopters ringförmig um die Längsachse (Z, Z') angeordnet sind, und
wobei die Startstufe (5; 105) mit zumindest einer Stromspeichereinrichtung (58; 158) zur Speicherung von elektrischer Energie und zur Versorgung der äußeren Rotorantriebe (53) mit elektrischer Energie versehen ist und wobei zumindest ein Teil der Rotorantriebe (53) bei einer Autorotation der äußeren Rotoren (52) in einem Generatormodus betreibbar ist, in dem elektrische Energie erzeugbar ist, und wobei die betreffenden Rotorantriebe (53) ausgebildet sind, um die erzeugte elektrische Energie in die jeweils zugeordnete Stromspeichereinrichtung (58; 158) zurückzuführen.

2. Trägerrakete nach Anspruch 1,
**dadurch gekennzeichnet,**
**dass** die Oberstufe (104) mit zumindest einem Rückstoßantrieb (143) versehen ist und eine Mehrzahl von mittels jeweils eines Rotorantriebs (148) antreibbaren inneren Landerotoren (149) aufweist, deren jeweilige Rotorachse (Z'_{L}) im Wesentlichen parallel zur Längsachse (Z') des Raketenkörpers (102) ausgerichtet ist, und die nach Art eines Multikopters im Inneren der Oberstufe ringförmig um die Längsachse (Z, Z') angeordnet sind.

3. Trägerrakete nach Anspruch 1 oder 2,
**dadurch gekennzeichnet,**
**dass** der jeweilige Rotorantrieb (33, 133, 148) zumindest einen Elektromotor als Antriebsmaschine aufweist.

4. Trägerrakete nach Anspruch 1 und 3 oder einem der Ansprüche 1 bis 3,
**dadurch gekennzeichnet,**
**dass** die Haupt-Antriebsstufe (3; 103) mit zumindest einer Stromspeichereinrichtung (39; 139) zur Speicherung von elektrischer Energie und zur Versorgung der inneren Rotorantriebe (33; 133) mit elektrischer Energie versehen ist.

5. Trägerrakete nach Anspruch 2 und 3 oder einem der Ansprüche 2 bis 4,
**dadurch gekennzeichnet,**
**dass** die Oberstufe (104) mit zumindest einer Stromspeichereinrichtung (144) zur Speicherung von elektrischer Energie und zur Versorgung der Rotorantriebe (148) der inneren Landerotoren (149) mit elektrischer Energie versehen ist.

6. Trägerrakete nach einem der Ansprüche 4 oder 5,
**dadurch gekennzeichnet,**
**dass** zumindest ein Teil der Rotorantriebe (33, 133; 148) bei einer Autorotation der zugeordneten Rotoren (34: 134) in einem Generatormodus betreibbar ist, in dem elektrische Energie erzeugbar ist, und dass die betreffenden Rotorantriebe (33, 133; 148) ausgebildet sind, um die erzeugte elektrische Energie in die jeweils zugeordnete Stromspeichereinrichtung (39, 139; 144) zurückzuführen.

7. Verfahren zum Betreiben einer Trägerrakete (1; 101) nach Anspruch 1 mit einer wiederverwendbaren Startstufe (5; 105), wobei die Trägerrakete (1; 101) in einem ersten Schritt mittels der Rotorantriebe (53) der Startstufe (5; 105) von einem Startplatz auf ein vorgegebenes erstes Höhenniveau transferiert wird, wobei beim Erreichen des ersten Höhenniveaus der Rückstoßantrieb (36; 136) der Antriebsstufe (3; 103) gezündet und die Startstufe (5; 105) vom Raketenkörper (2; 102) beziehungsweise von der Antriebsstufe (3; 103) entkoppelt wird und wobei die Startstufe (5; 105) aus dem ersten Höhenniveau unter Rückgewinnung von elektrischer Energie durch die als Generatoren arbeitenden Rotorantriebe absinkt und wieder zurückgeführt wird.

8. Verfahren zum Betreiben einer Trägerrakete (1; 101) nach Anspruch 1 mit einer wiederverwendbaren Startstufe (5; 105) und einer Haupt-Antriebsstufe (3; 103), wobei die Trägerrakete (1; 101) in einem ersten Schritt mittels der Rotorantriebe (53, 33, 133) der Startstufe (5; 105) und der Haupt-Antriebsstufe (3; 103) von einem Startplatz auf ein vorgegebenes erstes Höhenniveau transferiert wird, wobei beim Erreichen des ersten Höhenniveaus der Rückstoßantrieb (36; 136) der Haupt-Antriebsstufe (3; 103) gezündet und die Startstufe (5; 105) vom Raketenkörper (2; 102) beziehungsweise von der Haupt-Antriebsstufe (3; 103) entkoppelt wird und wobei die Startstufe (5; 105) aus dem ersten Höhenniveau absinkt und wieder zurückgeführt wird,
wobei beim Erreichen eines zweiten Höhenniveaus der Rückstoßantrieb (43; 143) der Oberstufe (4; 104) gezündet und die Haupt-Antriebsstufe (3; 103) von der Oberstufe (4; 104) entkoppelt wird und wobei die Haupt-Antriebsstufe (3; 103) aus dem zweiten Höhenniveau absinkt und wieder zurückgeführt wird.

9. Verfahren zum Betreiben einer Trägerrakete (101) nach Anspruch 2 mit einer wiederverwendbaren Startstufe (105),einer Haupt-Antriebsstufe (103) und einer Oberstufe (104), wobei die Trägerrakete (101) in einem ersten Schritt mittels der Rotorantriebe (53, 133) der Startstufe (105) und der Haupt-Antriebsstufe (103) von einem Startplatz auf ein vorgegebenes erstes Höhenniveau transferiert wird, wobei beim Erreichen des ersten Höhenniveaus der Rückstoßantrieb (136) der Haupt-Antriebsstufe (103) gezündet und die Startstufe (105) vom Raketenkörper (101) beziehungsweise von der Haupt-Antriebsstufe (103) entkoppelt wird und wobei die Startstufe (105) aus dem ersten Höhenniveau absinkt und wieder zurückgeführt wird, wobei beim Erreichen eines zweiten Höhenniveaus der Rückstoßantrieb (143) der Oberstufe (104) gezündet und die Haupt-Antriebsstufe (103) von der Oberstufe (104) entkoppelt wird und wobei die Haupt-Antriebsstufe (103) aus dem zweiten Höhenniveau absinkt und wieder zurückgeführt wird und wobei die Oberstufe (104) nach dem Erreichen eines Ziel-Orbits mittels zumindest einer Rückstoßantriebsvorrichtung zurück zur Erde befördert wird und nach dem Wiedereintritt in die Erdatmosphäre zur Erdoberfläche zurückgeführt wird.

10. Verfahren nach Anspruch 7 oder 8,
**dadurch gekennzeichnet,**
**dass** die Rotoren (52) der Startstufe (5; 105) beim Absinken bis zu einem ersten Abfang-Höhenniveau in einem Autogyromodus betrieben werden, wobei zumindest ein Teil der Rotorantriebe (53) elektrische Energie erzeugt und in die zugeordnete Stromspeichereinrichtung (58; 158) zurückführt, und
**dass** beim Erreichen des ersten Abfang-Höhenniveaus die Rotorantriebe (53) der Startstufe (5; 105) wieder in einen Antriebsmodus zurückgeschaltet werden, woraufhin die Startstufe (5; 105) in einem kontrollierten Sinkflug- und Landemodus betrieben wird.

11. Verfahren nach Anspruch 8, 9 oder 10,
**dadurch gekennzeichnet,**
**dass** die Rotoren (34; 134) der Haupt-Antriebsstufe (3; 103) beim Absinken bis zu einem zweiten Abfang-Höhenniveau in einem Autogyromodus betrieben werden, wobei zumindest ein Teil der Rotorantriebe (33; 133) elektrische Energie erzeugt und in die zugeordnete Stromspeichereinrichtung (39; 139) zurückführt, und
**dass** beim Erreichen des zweiten Abfang-Höhenniveaus die Rotorantriebe (33; 133) der Haupt-Antriebsstufe (3; 103) wieder in einen Antriebsmodus zurückgeschaltet werden, woraufhin die Haupt-Antriebsstufe (3; 103) in einem kontrollierten Sinkflug- und Landemodus betrieben wird.

12. Verfahren nach Anspruch 9, 10 oder 11,
**dadurch gekennzeichnet,**
**dass** die Landerotoren (149) der Oberstufe (104) beim Absinken innerhalb der Erdatmosphäre bis zu einem dritten Abfang-Höhenniveau in einem Autogyromodus betrieben werden, wobei zumindest ein Teil der Rotorantriebe (148) elektrische Energie erzeugt und in die zugeordnete Stromspeichereinrichtung (144) zurückführt, und
**dass** beim Erreichen des dritten Abfang-Höhenniveaus die Rotorantriebe (148) der Oberstufe (104) in einen Antriebsmodus geschaltet werden, woraufhin die Oberstufe (104) in einem kontrollierten Sinkflug- und Landemodus betrieben wird.

## Claims

1. A launch vehicle with a rocket body (2; 102) having a longitudinal axis (Z, Z'), which rocket body has at least one propulsion stage (3; 103) which can be driven by a reaction propulsion system (36; 136) acting predominantly parallel to the longitudinal axis (Z, Z'),
wherein the launch vehicle is provided with a plurality of rotors each drivable by means of a rotor drive, the respective rotor axis of which is aligned substantially parallel to the longitudinal axis of the rocket body,
wherein the launch vehicle comprises a separate takeoff stage (5; 105) coupled to or couplable to and decouplable from the rocket body (2; 102) and/or the propulsion stage (3; 103), said takeoff stage comprising the plurality of outer rotors (52),
wherein the outer rotors (52) are arranged in the manner of a multicopter radially outside the rocket body (2; 102) surrounding it and
wherein the respective rotor drive (53) has at least one electric drive motor as drive engine,
wherein the propulsion stage forms a main propulsion stage (3; 103) which is coupled to or can be coupled to and decoupled from the rocket body (2; 102) and/or an upper stage (4; 104) of the launch vehicle (1; 101), which upper stage (4; 104) has at least one reaction propulsion system (43; 143), wherein the main propulsion stage (3; 103) has at least one reaction propulsion system (36; 136) and a plurality of inner rotors (34; 134) each of which can be driven by means of a rotor drive (33; 133) and whose respective rotor axis (Z_{RI}, Z'_{RI}) is aligned essentially parallel to the longitudinal axis (Z, Z') of the rocket body (2; 102), and which are arranged annularly around the longitudinal axis (Z, Z') in the manner of a multicopter, and
wherein the takeoff stage (5; 105) is provided with at least one power storage device (58; 158) for storing electrical energy and for supplying electrical energy to the outer rotor drives (53), and
wherein at least some of the rotor drives (53) can be operated in a generator mode, in which electrical energy can be generated, during an autorotation of the outer rotors (52), and wherein the respective rotor drives (53) are designed to feed the electrical energy generated back into the respectively associated power storage device (58; 158).

2. The launch vehicle according to claim 1,
**characterized**
**in that** the upper stage (104) is provided with at least one reaction propulsion system (143) and has a plurality of internal landing rotors (149) which can each be driven by means of a rotor drive (148) and whose respective rotor axis (Z'_{L}) is aligned essentially parallel to the longitudinal axis (Z') of the rocket body (102), and which are arranged annularly around the longitudinal axis (Z, Z') in the manner of a multicopter in the interior of the upper stage.

3. A launch vehicle according to claim 1 or 2,
**characterized**
**in that** the respective rotor drive (33, 133, 148) has at least one electric drive motor as drive engine.

4. A launch vehicle according to claim 1 and 3 or any of claims 1 to 3,
**characterized**
**in that** the main propulsion stage (3; 103) is provided with at least one power storage device (39; 139) for storing electrical energy and for supplying the inner rotor drives (33; 133) with electrical energy.

5. A launch vehicle according to claim 2 and 3 or any of the claims 2 to 4,
**characterized**
**in that** the upper stage (104) is provided with at least one power storage device (144) for storing electrical energy and for supplying electrical energy to the rotor drives (148) of the inner landing rotors (149).

6. A launch vehicle according to any one of claims 4 or 5,
**characterized**
**in that** at least some of the rotor drives (33, 133; 148) can be operated in a generator mode, in which electrical energy can be generated, during an autorotation of the associated rotors (34; 134), and in that the respective rotor drives (33, 133; 148) are designed to return the electrical energy generated to the respectively associated power storage device (39, 139; 144).

7. A method of operating a launch vehicle (1; 101) according to claim 1 with a reusable takeoff stage (5; 105), wherein the launch vehicle (1; 101) is transferred in a first step by means of the rotor drives (53) of the takeoff stage (5; 105) from a launch site to a predetermined first altitude level, wherein on reaching the first altitude level the reaction propulsion system (36; 136) of the propulsion stage (3; 103) is ignited and the takeoff stage (5; 105) is decoupled from the rocket body (2; 102) or from the propulsion stage (3; 103), and the takeoff stage (5; 105) descends from the first altitude level with recovery of electrical energy by means of the rotors operating as generators and is returned again.

8. A method of operating a launch vehicle (1; 101) according to claim 1 with a reusable takeoff stage (5; 105) and a main propulsion stage (3; 103), wherein the launch vehicle (1; 101) is transferred in a first step by means of the rotor drives (53, 33, 133) of the takeoff stage (5; 105) and the main propulsion stage (3; 103) from a launch site to a predetermined first altitude level, the reaction propulsion system (36; 136) of the main propulsion stage (3; 103) being ignited and the takeoff stage (5; 105) being decoupled from the rocket body (2; 102) and from the main propulsion stage (3; 103) respectively when reaching the first altitude level, and the takeoff stage (5; 105) descending from the first altitude level and being returned again,
wherein upon reaching a second altitude level, the reaction propulsion system (43; 143) of the upper stage (4; 104) is ignited and the main propulsion stage (3; 103) is decoupled from the upper stage (4; 104), and wherein the main propulsion stage (3; 103) descends from the second altitude level and is returned.

9. A method of operating a launch vehicle (101) according to claim 2 with a reusable takeoff stage (105),a main propulsion stage (103) and an upper stage (104), wherein the launch vehicle (101) is transferred in a first step by means of the rotor drives (53, 133) of the takeoff stage (105) and the main propulsion stage (103) from a launch site to a predetermined first altitude level, wherein, upon reaching the first altitude level, the reaction propulsion system (136) of the main propulsion stage (103) is ignited and the takeoff stage (105) is decoupled from the rocket body (101) and from the main propulsion stage (103), respectively, and wherein the takeoff stage (105) descends from the first altitude level and is returned,
wherein upon reaching a second altitude level, the reaction propulsion system (143) of the upper stage (104) is ignited and the main propulsion stage (103) is decoupled from the upper stage (104), and wherein the main propulsion stage (103) descends from the second altitude level and is returned, and wherein the upper stage (104) is propelled back to earth by means of at least one reaction propulsion device after reaching a target orbit and is returned to the earth's surface after re-entering the earth's atmosphere.

10. A method according to claim 7 or 8,
**characterized**
**in that** the rotors (52) of the takeoff stage (5; 105) are operated in an autogyro mode when descending to a first intercept altitude level, at least a portion of the rotor drives (53) generating electrical energy and feeding it back into the associated power storage device (58; 158), and
**in that** upon reaching the first intercept altitude level, the rotor drives (53) of the takeoff stage (5; 105) are switched back to a drive mode, whereupon the takeoff stage (5; 105) is operated in a controlled descent and landing mode.

11. A method according to claim 8, 9 or 10,
**characterized**
**in that** the rotors (34; 134) of the main propulsion stage (3; 103) are operated in an autogyro mode when descending to a second intercept height level, at least part of the rotor drives (33; 133) generating electrical energy and feeding it back into the associated power storage device (39; 139), and
**in that** upon reaching the second intercept altitude level, the rotor drives (33; 133) of the main propulsion stage (3; 103) are switched back to a drive mode, whereupon the main propulsion stage (3; 103) is operated in a controlled descent and landing mode.

12. A method according to claim 9, 10 or 11,
**characterized**
**in that** the landing rotors (149) of the upper stage (104) are operated in an autogyro mode during descent within the earth's atmosphere to a third intercept altitude level, at least a portion of the rotor drives (148) generating and returning electrical energy to the associated power storage device (144), and
**in that** upon reaching the third intercept altitude level, the rotor drives (148) of the upper stage (104) are switched to a drive mode, whereupon the upper stage (104) is operated in a controlled descent and landing mode.

## Revendications

1. Lanceur spatial comprenant un corps de lanceur (2 ; 102) qui présente un axe longitudinal (Z, Z') et comporte au moins un étage de propulsion (3 ; 103) apte à être propulsé par un propulseur à réaction (36 ; 136) agissant principalement parallèlement à l'axe longitudinal (Z, Z'),
dans lequel
le lanceur spatial est pourvu d'une pluralité de rotors externes aptes à être entraînés au moyen d'un entraînement de rotor respectif, dont l'axe de rotor respectif est orienté sensiblement parallèlement à l'axe longitudinal du corps de lanceur,
le lanceur spatial comprend un étage de décollage (5 ; 105) séparé, couplé ou apte à être couplé au corps de lanceur (2 ; 102) et/ou à l'étage de propulsion (3 ; 103) et d'être découplé de celui-ci, qui comprend la pluralité de rotors externes (52),
les rotors externes (52) sont disposés radialement à l'extérieur du corps de lanceur (2 ; 102) en entourant celui-ci à la manière d'un multicoptère, et
l'entraînement de rotor respectif (53) comprend au moins un moteur électrique en tant que machine motrice,
l'étage de propulsion constitue un étage de propulsion principal (3 ; 103) qui est couplé ou apte à être couplé au corps de lanceur (2 ; 102) et/ou à un étage supérieur (4 ; 104) du lanceur spatial (1 ; 101), comprenant au moins un propulseur à réaction (43 ; 143), et qui est apte à être découplé de celui-ci,
l'étage de propulsion principal (3 ; 103) comprend au moins un propulseur à réaction (36 ; 136) et une pluralité de rotors internes (34 ; 134) aptes à être entraînés au moyen d'un entraînement de rotor respectif (33 ; 133), dont l'axe de rotor respectif (Z_{RI}, Z'_{RI}) est orienté sensiblement parallèlement à l'axe longitudinal (Z, Z') du corps de lanceur (2 ; 102) et qui sont disposés en forme d'anneau autour de l'axe longitudinal (Z, Z') à la manière d'un multicoptère, et
l'étage de décollage (5 ; 105) est pourvu d'au moins un dispositif de stockage de courant (58 ; 158) pour stocker de l'énergie électrique et pour alimenter en énergie électrique les entraînements de rotor externes (53), et
lors d'une autorotation des rotors externes (52), au moins une partie des entraînements de rotor (53) sont aptes à fonctionner en mode générateur permettant de générer de l'énergie électrique, et
les entraînements de rotor respectifs (53) sont conçus pour envoyer l'énergie électrique générée dans le dispositif de stockage de courant (58 ; 158) respectivement associé.

2. Lanceur spatial selon la revendication 1,
**caractérisé en ce que**
l'étage supérieur (104) est pourvu d'au moins un propulseur à réaction (143) et comprend une pluralité de rotors d'atterrissage internes (149) aptes à être entraînés au moyen d'un entraînement de rotor respectif (148), dont l'axe de rotor respectif (Z'_{L}) est orienté sensiblement parallèlement à l'axe longitudinal (Z') du corps de lanceur (102) et qui sont disposés en forme d'anneau autour de l'axe longitudinal (Z, Z') à l'intérieur de l'étage supérieur à la manière d'un multicoptère.

3. Lanceur spatial selon la revendication 1 ou 2,
**caractérisé en ce que**
l'entraînement de rotor respectif (33, 133, 148) comprend au moins un moteur électrique en tant que machine motrice.

4. Lanceur spatial selon les revendications 1 et 3 ou l'une des revendications 1 à 3,
**caractérisé en ce que**
l'étage de propulsion principal (3 ; 103) est pourvu d'au moins un dispositif de stockage de courant (39 ; 139) pour stocker de l'énergie électrique et pour alimenter en énergie électrique les entraînements de rotor internes (33 ; 133).

5. Lanceur spatial selon les revendications 2 et 3 ou l'une des revendications 2 à 4,
**caractérisé en ce que**
l'étage supérieur (104) est pourvu d'au moins un dispositif de stockage de courant (144) pour stocker de l'énergie électrique et pour alimenter en énergie électrique les entraînements de rotor (148) des rotors d'atterrissage internes (149).

6. Lanceur spatial selon l'une des revendications 4 ou 5,
**caractérisé en ce que**
lors d'une autorotation des rotors associés (34 ; 134), au moins une partie des entraînements de rotor (33, 133 ; 148) sont aptes à fonctionner en mode générateur permettant de générer de l'énergie électrique, et
**en ce que** les entraînements de rotor respectifs (33, 133 ; 148) sont conçus pour envoyer l'énergie électrique générée dans le dispositif de stockage de courant (39, 139 ; 144) respectivement associé.

7. Procédé de fonctionnement d'un lanceur spatial (1 ; 101) selon la revendication 1, comprenant un étage de décollage réutilisable (5 ; 105),
dans lequel
dans une première étape, le lanceur spatial (1 ; 101) est transféré, au moyen des entraînements de rotor (53) de l'étage de décollage (5 ; 105), d'un site de décollage à un premier niveau d'altitude prédéfini,
lorsque le premier niveau d'altitude est atteint, le propulseur à réaction (36 ; 136) de l'étage de propulsion (3 ; 103) est allumé et l'étage de décollage (5 ; 105) est découplé du corps de lanceur (2 ; 102) ou de l'étage de propulsion (3 ; 103), et
l'étage de décollage (5 ; 105) descend depuis le premier niveau d'altitude avec récupération de l'énergie électrique par les entraînements de rotor fonctionnant comme des générateurs, et est ramené.

8. Procédé de fonctionnement d'un lanceur spatial (1 ; 101) selon la revendication 1, comprenant un étage de décollage réutilisable (5 ; 105) et un étage de propulsion principal (3 ; 103),
dans lequel
dans une première étape, le lanceur spatial (1 ; 101) est transféré, au moyen des entraînements de rotor (53, 33, 133) de l'étage de décollage (5 ; 105) et de l'étage de propulsion principal (3 ; 103), d'un site de décollage à un premier niveau d'altitude prédéfini,
lorsque le premier niveau d'altitude est atteint, le propulseur à réaction (36 ; 136) de l'étage de propulsion principal (3 ; 103) est allumé et l'étage de décollage (5 ; 105) est découplé du corps de lanceur (2 ; 102) ou de l'étage de propulsion principal (3 ; 103), et
l'étage de décollage (5 ; 105) descend depuis le premier niveau d'altitude est ramené,
lorsqu'un deuxième niveau d'altitude est atteint, le propulseur à réaction (43 ; 143) de l'étage supérieur (4 ; 104) est allumé et l'étage de propulsion principal (3 ; 103) est découplé de l'étage supérieur (4 ; 104), et
l'étage de propulsion principal (3 ; 103) descend depuis le deuxième niveau d'altitude et est ramené.

9. Procédé de fonctionnement d'un lanceur spatial (101) selon la revendication 2, comprenant un étage de décollage réutilisable (105), un étage de propulsion principal (103) et un étage supérieur (104),
dans lequel
dans une première étape, le lanceur spatial (101) est transféré, au moyen des entraînements de rotor (53, 133) de l'étage de décollage (105) et de l'étage de propulsion principal (103), d'un site de décollage à un premier niveau d'altitude prédéfini,
lorsque le premier niveau d'altitude est atteint, le propulseur à réaction (136) de l'étage de propulsion principal (103) est allumé et l'étage de décollage (105) est découplé du corps de lanceur (101) ou de l'étage de propulsion principal (103), et
l'étage de décollage (105) descend depuis le premier niveau d'altitude et est ramené,
lorsqu'un deuxième niveau d'altitude est atteint, le propulseur à réaction (143) de l'étage supérieur (104) est allumé et l'étage de propulsion principal (103) est découplé de l'étage supérieur (104), et
l'étage de propulsion principal (103) descend depuis le deuxième niveau d'altitude et est ramené, et
l'étage supérieur (104), après avoir atteint une orbite cible, est renvoyé vers la Terre au moyen d'au moins un dispositif de propulsion à réaction, et, après être rentré dans l'atmosphère terrestre, est ramené vers la surface de la Terre.

10. Procédé selon la revendication 7 ou 8,
**caractérisé en ce que**
lors de la descente jusqu'à un premier niveau d'altitude d'interception, les rotors (52) de l'étage de décollage (5 ; 105) fonctionnent en mode autogyre, au moins une partie des entraînements de rotor (53) générant de l'énergie électrique et l'envoyant dans le dispositif de stockage de courant associé (58 ; 158), et
**en ce que**, lorsque le premier niveau d'altitude d'interception est atteint, les entraînements de rotor (53) de l'étage de décollage (5 ; 105) sont à nouveau commutés en mode d'entraînement, à la suite de quoi l'étage de décollage (5 ; 105) fonctionne en mode de descente et d'atterrissage contrôlé.

11. Procédé selon la revendication 8, 9 ou 10,
**caractérisé en ce que**
lors de la descente jusqu'à un deuxième niveau d'altitude d'interception, les rotors (34 ; 134) de l'étage de propulsion principal (3 ; 103) fonctionnent en mode autogyre, au moins une partie des entraînements de rotor (33 ; 133) générant de l'énergie électrique et l'envoyant dans le dispositif de stockage de courant associé (39 ; 139), et
**en ce que**, lorsque le deuxième niveau d'altitude d'interception est atteint, les entraînements de rotor (33 ; 133) de l'étage de propulsion principal (3 ; 103) sont à nouveau commutés en mode d'entraînement, à la suite de quoi l'étage de propulsion principal (3 ; 103) fonctionne en mode de descente et d'atterrissage contrôlé.

12. Procédé selon la revendication 9, 10 ou 11,
**caractérisé en ce que**
lors de la descente au sein de l'atmosphère terrestre jusqu'à un troisième niveau d'altitude d'interception, les rotors d'atterrissage (149) de l'étage supérieur (104) fonctionnent en mode autogyre, au moins une partie des entraînements de rotor (148) générant de l'énergie électrique et l'envoyant dans le dispositif de stockage de courant associé (144), et
**en ce que**, lorsque le troisième niveau d'altitude d'interception est atteint, les entraînements de rotor (148) de l'étage supérieur (104) sont commutés en mode d'entraînement, à la suite de quoi l'étage supérieur (104) fonctionne en mode de descente et d'atterrissage contrôlé.
